(19) Europäisches Patentamt

European Patent Office

Office européen des brevets

(11) **EP 2 596 234 B1**

(12) **FASCICULE DE BREVET EUROPEEN**

(45) Date de publication et mention de la délivrance du brevet:
**25.02.2015 Bulletin 2015/09**

(21) Numéro de dépôt: **11743847.3**

(22) Date de dépôt: **12.07.2011**

(51) Int Cl.:
*F03B 3/12* *(2006.01)*    *F03B 11/04* *(2006.01)*

(86) Numéro de dépôt international:
**PCT/FR2011/051657**

(87) Numéro de publication internationale:
**WO 2012/017150 (09.02.2012 Gazette 2012/06)**

(54) **ROUE DE TURBINE FRANCIS AVEC UNE RÉPARTITION ANGULAIRE DES AUBES NON PÉRIODIQUE**

FRANCIS-TURBINENLAUFRAD MIT UNPERODISCHER WINKELVERTEILUNG DER SCHAUFELN

FRANCIS TURBINE RUNNER WITH NON-PERIODIC ANGULAR DISTRIBUTION OF VANES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.07.2010 FR 1055957**

(43) Date de publication de la demande:
**29.05.2013 Bulletin 2013/22**

(73) Titulaire: **ALSTOM Renewable Technologies
38100 Grenoble (FR)**

(72) Inventeurs:
• **BOMCHIL, Yoann**
  **F-38600 Fontaine (FR)**
• **BALCET, Nicolas**
  **F-38500 Coublevie (FR)**

(74) Mandataire: **Pesce, Michele et al
ALSTOM Technology Ltd
CHTI Intellectual Property
Brown Boveri Strasse 7
5401 Baden (CH)**

(56) Documents cités:
**FR-A1- 2 919 353    US-A1- 2010 086 394**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

L'invention a trait à une roue de turbine Francis, ainsi qu'à une installation de conversion d'énergie comprenant une telle roue.

Dans le domaine de la conversion d'énergie hydraulique en énergie électrique ou mécanique, il est connu d'utiliser une roue de turbine Francis pour entraîner en rotation un arbre supportant cette roue et relié, par exemple, à un alternateur. Dans certaines plages de points de fonctionnement, des phénomènes de fluctuation de pression se produisent en aval de la roue et s'amplifient. Ces fluctuations de pression gênent l'exploitation de la turbine.

Une solution pour répondre à ce problème est d'équiper une roue de turbine Francis avec une pointe comprenant des surfaces respectivement convergente et divergente, comme envisagé dans WO-A-2005/038243. Ceci limite, dans une large mesure, les fluctuations de pression. Toutefois, pour certaines turbines Francis, des turbulences peuvent subsister.

Il est également connu de US-A-2010/086394 de prévoir un jeu d'aubes courtes et un jeu d'aubes longues sur une roue de turbine Francis, chacun de ces jeux d'aubes étant réparti de façon périodique et régulière autour de l'axe de rotation de la roue. FR-A-2 919 553 prévoit l'utilisation d'un nombre impair d'aubes dans une zone de turbine Francis, ces aubes étant régulièrement reparties, avec une périodicité constante, autour de l'axe de rotation de la roue. Avec ces répartitions périodiques et régulières des turbulences peuvent subsister, au moins à certains régimes, en aval de la roue.

C'est à ces inconvénients qu'entend plus particulièrement remédier l'invention en proposant une roue de turbine Francis qui réduit, en elle-même, les fluctuations de pression en aval.

A cet effet, l'invention concerne une roue de turbine Francis qui comprend un plafond, une ceinture et plusieurs aubes réparties autour d'un axe de rotation de cette roue, caractérisée en ce que les aubes ne sont pas symétriques par rapport à l'axe de rotation et présentent une répartition par rapport à cet axe qui n'est pas périodique et régulière.

En d'autres termes, la roue ne présente aucune symétrie de révolution par rapport à son axe de rotation. Le caractère non symétrique des aubes par rapport à l'axe de rotation correspond au fait que la répartition de ces aubes autour de cet axe n'est pas périodique et régulière, du fait d'un écart inter-aubes non constant et/ou d'une géométrie variable des aubes. Ce caractère non symétrique permet de perturber la répartition périodique de l'écoulement qui traverse la roue, ce qui réduit sensiblement les fluctuations de pression en aval de la roue.

Selon des aspects avantageux mais non obligatoires de l'invention, une telle roue peut incorporer une ou plusieurs des caractéristiques suivantes, prises dans toute combinaison techniquement admissible :

- Les aubes sont réparties autour de l'axe de rotation avec un écart angulaire entre deux aubes adjacentes non constant ;
- Les aubes sont réparties autour de l'axe de rotation avec une position angulaire définie, par rapport à une position de référence, au moyen d'un angle déterminé à partir d'un numéro d'ordre de chaque aube par une fonction non affine, notamment une fonction trigonométrique ou aléatoire ;
- Les aubes sont réparties autour de l'axe de rotation selon une loi de type

$$\alpha_i = \frac{i*360°}{N} + f(i)$$

où N est le nombre d'aubes de la roue, i est un entier naturel compris entre 1 et N et f est une fonction non affine. Avantageusement, cette fonction f est sinusoïdale et s'exprime sous la forme

$$f(i) = A \sin \left(B \frac{i*360°}{N}\right)$$

où A est une amplitude angulaire fixe, de préférence comprise entre 2 et 10°, et B est un nombre entier, de préférence compris entre 1 et 4

- Les aubes sont de même géométrie. En variante, les aubes sont de géométries différentes. Dans ce cas, l'épaisseur maximale des aubes et/ou la géométrie du bord d'attaque et/ou du bord de fuite des aubes est variable d'une aube à l'autre. La courbure des aubes peut également être variable d'une aube à l'autre.

L'invention concerne également une installation de conversion d'énergie hydraulique en énergie électrique ou mécanique, cette installation comprenant une conduite d'amenée d'eau, une roue tournant autour d'un axe de rotation, un arbre de supportage de la roue et un conduit d'aspiration. Cette installation est caractérisée en ce que la roue est telle que mentionnée ci-dessus.

L'invention sera mieux comprise et d'autres avantages de celle-ci apparaitront plus clairement à la lumière de la description qui va suivre de deux modes de réalisation d'une roue de turbine Francis et d'une installation conformes à son principe, donnée uniquement à titre d'exemple et faite en référence aux dessins annexés dans lesquels :

- la figure 1 est une représentation schématique de principe, en section axiale, d'une installation conforme à un premier mode de réalisation de l'invention ;

- la figure 2 est une section à plus grande échelle selon la ligne II-II à la figure 1 ;
- la figure 3 est un schéma représentatif de la position des aubes de la roue des figures 1 et 2 en comparaison avec les aubes d'une turbine à répartition symétrique ;
- la figure 4 est une représentation du décalage angulaire des aubes de la roue des figures 1 et 2 par rapport à une répartition symétrique de ces aubes autour de l'axe de rotation de la roue ; et
- la figure 5 est une section analogue à la figure 2, pour une roue conforme à un deuxième mode de réalisation de l'invention.

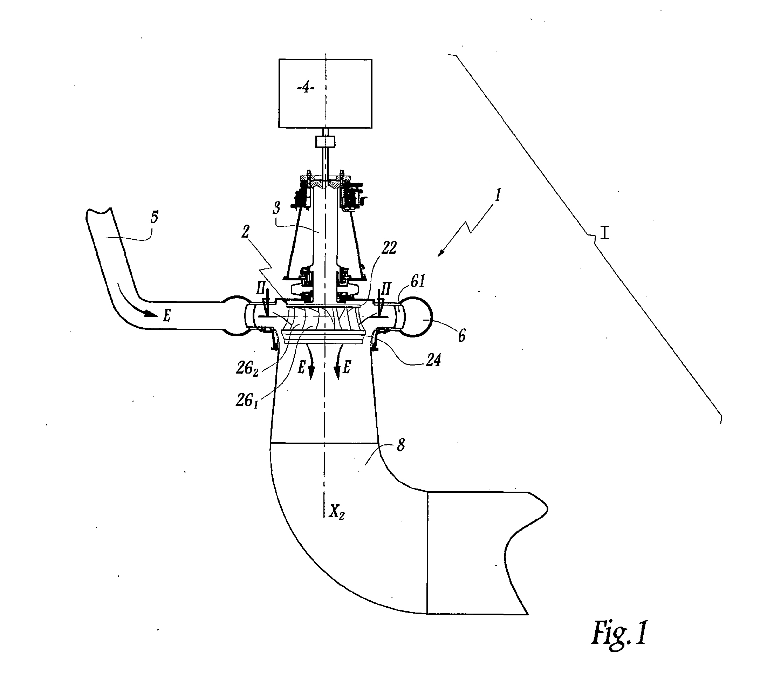

L'installation I représentée à la figure 1 comprend une turbine 1 de type Francis dont la roue 2 est destinée à être mise en rotation, autour d'un axe vertical $X_2$, par un écoulement forcé d'eau E provenant d'une retenue d'eau non représentée. Un arbre 3 supporte la roue et est couplé à un alternateur 4 qui délivre un courant alternatif à un réseau non représenté. L'installation I permet donc de convertir l'énergie hydraulique de l'écoulement E en énergie électrique. L'installation I peut comprendre plusieurs turbines 1 alimentées à partir de la même retenue d'eau.

En variante, l'arbre 3 peut être couplé à un ensemble mécanique, auquel cas l'installation I convertie l'énergie hydraulique de l'élément E en énergie mécanique.

Une conduite d'alimentation forcée 5 permet d'amener l'écoulement E à la roue 2 et s'étend entre la retenue d'eau et une bâche 6 équipée de directrices 61 qui régulent l'écoulement E. Un conduit d'aspiration 8 est prévu en aval de la turbine 1 pour évacuer l'écoulement E et le renvoyer vers le lit d'une rivière ou d'un fleuve.

La roue 2 comprend un plafond 22, une ceinture 24 et treize aubes $26_1$ à $26_{13}$ réparties autour de l'axe $X_2$ qui est un axe de symétrie pour le plafond 22 et la ceinture 24. On note $26_i$ une aube pour i entier naturel compris entre 1 et 13.

Les aubes $26_i$ ont la même géométrie et comprennent chacune un bord d'attaque 26a, un bord de fuite 26b, une surface d'extrados 26c et une surface d'intrados 26d.

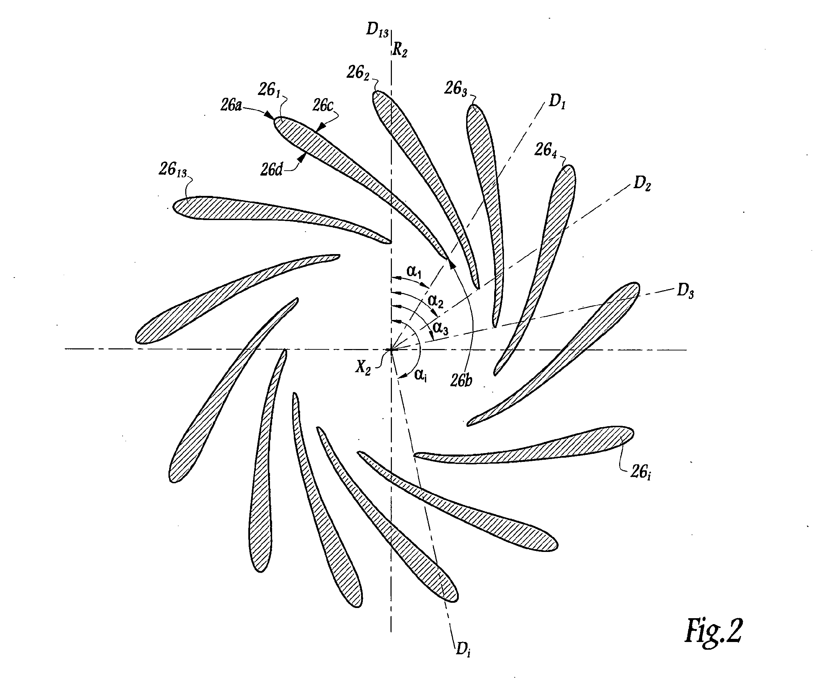

On repère la position angulaire d'une aube $26_i$ autour de l'axe $X_2$ par un angle $\alpha_i$ défini, dans le plan de la figure 2, entre un rayon $R_2$ de la roue 2 constituant une origine et une droite $D_i$ passant par l'axe $X_2$ et par le bord de fuite de cette aube dans ce plan.

Comme il ressort des figures 2 à 4, les aubes $26_i$ ne sont pas régulièrement réparties autour de l'axe $X_2$.

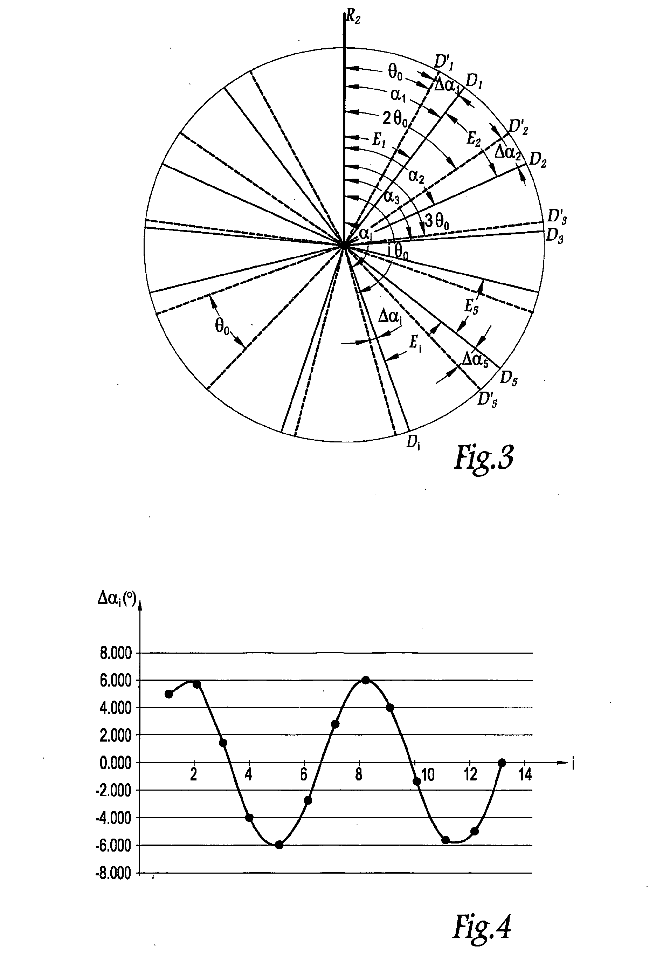

Si les aubes $26_i$ étaient régulièrement réparties autour de l'axe $X_2$, alors l'écart angulaire entre deux aubes aurait une valeur constante $\theta_0$ représentée à la figure 3 entre des rayons en traits pointillés correspondant à une répartition régulière de treize aubes autour de l'axe $X_2$. Au contraire, les aubes $26_i$ ont la répartition représentée en trait plein à la figure 3.

Pour i compris entre 2 et 13, on définit l'écart angulaire $E_i$ entre les aubes de rang i et i-1 comme égal à la différence entre les angles $\alpha_i$ et $\alpha_{i-1}$. L'écart angulaire $E_1$ entre les aubes $26_1$ et $26_{13}$ est égal à $\alpha_1 - \alpha_{13} = \alpha_1$ puisque $\alpha_{13}$ vaut 0°. Avec la convention de notation $\alpha_{13} = \alpha_0 = 0°$, les écarts angulaires $E_i$ sont donc définis comme

$$E_i = \alpha_i - \alpha_{i\text{-}1}.$$

Les écarts angulaires $E_i$ ne sont pas constants autour de l'axe $X_2$. Ainsi, les aubes $26_i$ ne sont pas symétriques autour de cet axe.

On définit un écart angulaire $\Delta\alpha_i$ entre un angle $\alpha_i$ et l'angle que formerait l'aube $26_i$ par rapport au rayon $R_2$ en cas de répartition régulière des aubes $26_i$ autour de l'axe $X_2$. En d'autres termes, l'écart angulaire $\Delta\alpha_i$ est représenté sur la figure 3 par l'écart angulaire entre une droite $D_i$ en trait plein et la droite $D'_i$ adjacente en traits pointillés.

Cet écart $\Delta\alpha_i$ est représenté à la figure 4, en fonction du rang i d'une aube, en prenant comme treizième aube celle dont le bord de fuite est aligné sur le rayon $R_2$, pour laquelle $\Delta\alpha_{13}$ vaut 0°. Par exemple, l'écart $\Delta\alpha_2$ pour l'aube $26_2$ est entre 5 et 6° et la droite $D_2$ est plus inclinée par rapport au rayon $R_2$ que la droite en traits pointillés $D'_2$ correspondant à la deuxième aube d'une répartition régulière. L'écart $\Delta\alpha_5$ pour l'aube $26_5$ est de -6° et la droite D est moins inclinée par rapport au rayon $R_2$ que la droite en traits pointillés $D'_5$ correspondant à la cinquième aube d'une répartition régulière.

Comme il ressort clairement des figures 3 et 4, la valeur de $\Delta\alpha_i$ varie entre les différentes aubes. Ainsi, l'écart entre deux aubes $26_i$ adjacentes n'est pas constant sur la roue 2.

En fait, la valeur de l'angle $\alpha_i$ est établie selon une loi du type

$$\alpha_i = \frac{i * 360°}{N} + f(i)$$

où

N est le nombre d'aubes de la roue 2, dans l'exemple 13

i est un entier naturel compris entre 1 et N

f est une fonction non affine, par exemple une fonction trigonométrique ou aléatoire.

Par exemple, comme représenté à la figure 4, la fonction f peut être sinusoïdale et exprimée sous la forme

$$f(i) = A \sin \left(B \, \frac{i * 360°}{N}\right)$$

où

A est une amplitude angulaire fixe, 6° dans l'exemple et

B est un nombre entier, 2 dans l'exemple.

En pratique, la valeur de A peut être choisie entre 2 et 10°, alors que la valeur de B peut être choisie entre 1 et 4.

La répartition non symétrique des aubes $26_i$ induit un écoulement différent dans chacun des espaces inter-aubes, ce qui a pour effet de limiter fortement la fluctuation de pression dans cette zone de l'installation I.

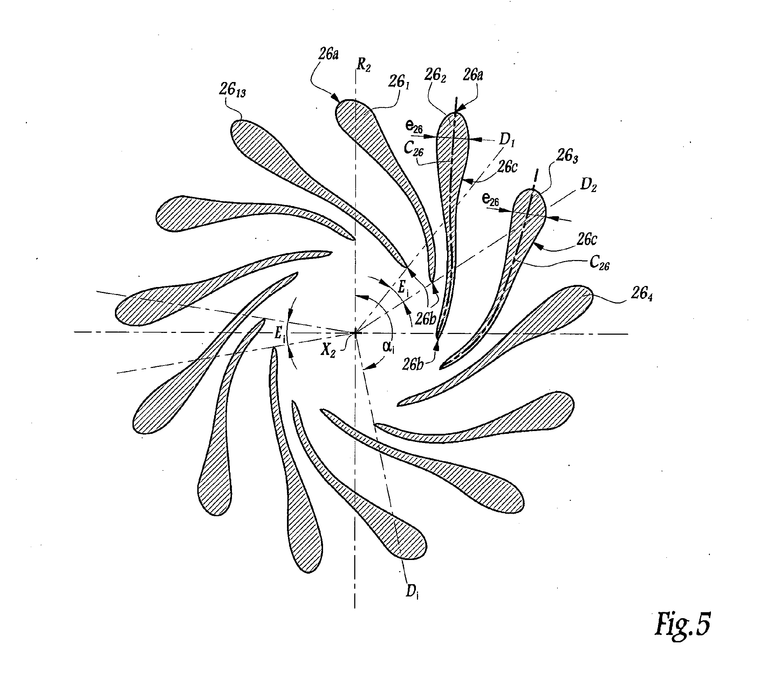

Dans le deuxième mode de réalisation de l'invention représenté à la figure 5, les éléments analogues à celui du premier mode de réalisation portent la même référence. Dans ce mode de réalisation, les aubes $26_i$ n'ont pas la même géométrie. Par exemple, la surface d'extrados 26c de l'aube $26_2$ présente une inflexion marquée définissant une zone concave, alors que la surface d'extrados 26c de l'aube $26_3$ ne présente, pas une telle zone d'inflexion. Les aubes $26_i$ ne sont donc pas symétriques autour de l'axe $X_2$.

Ceci a également pour effet que l'écoulement E en sortie de la roue 2 n'est pas symétrique autour de l'axe $X_2$.

Dans le mode de réalisation représenté à la figure 5, l'angle $\alpha_i$ repérant la position d'une aube $26_i$, avec la même définition que pour le premier mode de réalisation, croit avec un pas constant d'une aube à l'autre. En d'autres termes, l'écart angulaire $E_i$, défini comme dans le premier mode de réalisation entre deux aubes $26_i$ et $26_{i-1}$, est constant et les bords de fuite 26b des aubes $26_i$ sont régulièrement répartis autour de l'axe $X_2$ dans ce mode de réalisation.

Ceci n'est toutefois pas obligatoire et il est possible de prévoir une répartition non régulière des aubes $26_i$ ayant des géométries différentes entre elles. En d'autres termes, il est possible de combiner les approches mentionnées ci-dessus au sujet du premier mode de réalisation et du deuxième mode de réalisation.

Dans le deuxième mode de réalisation, la géométrie des aubes $26_i$ peut varier d'une aube à l'autre non seulement à cause de la géométrie des surfaces d'intrados et d'extrados 26c et 26d mais également en fonction de la géométrie des bords d'attaque 26a et de fuite 26b qui peuvent être différents d'une aube à l'autre, de l'épaisseur maximum $e_{26}$ ou de la courbure moyenne de l'aube, c'est-à-dire du rayon de courbure d'une courbe $C_{26}$ reliant le bord d'attaque et le bord de fuite d'une aube, qui peuvent également être différentes d'une aube à l'autre.

L'absence de symétrie des aubes $26_i$ autour de l'axe $X_2$, que ce soit du fait de leur écart angulaire non constant ou de leurs géométries différentes, ou des deux, permet une action non symétrique de ces aubes sur l'écoulement E, ce qui diminue fortement les risques de fluctuations de pression dans l'installation, sur une large plage de fonctionnement.

**Revendications**

1. Roue de turbine Francis (2) comprenant un plafond (22), une ceinture (24) et plusieurs aubes ($26_i$) réparties autour d'un axe de rotation ($X_2$) de la roue, les aubes ($26_i$) n'étant pas symétriques par rapport à l'axe de rotation ($X_2$), **caractérisée en ce que** les autres présentent une répartition autour de cet axe ($X_2$) qui n'est pas périodique et régulière.

2. Roue selon la revendication 1, **caractérisé en ce que** les aubes ($26_i$) sont réparties autour de l'axe de rotation avec un écart angulaire ($E_i$) entre deux aubes adjacentes ($26_i$) non constant.

3. Roue selon la revendication 2, **caractérisée en ce que** les aubes ($26_i$) sont réparties autour de l'axe de rotation ($X_2$) avec une position angulaire définie, par rapport à une position de référence ($R_2$), au moyen d'un angle ($\alpha_i$) déterminé à partir d'un numéro d'ordre (i) de chaque aube par une fonction non affine, notamment une fonction trigonométrique ou aléatoire.

4. Roue selon l'une des revendications 2 ou 3, **caractérisée en ce que** les aubes ($26_i$) sont réparties autour de l'axe de rotation ($X_2$) selon la loi :

$$\alpha_i = \frac{i * 360°}{N} + f(i)$$

où

N est le nombre d'aubes de la roue
i est un entier naturel compris entre 1 et N
et f est une fonction non affine.

5. Roue selon la revendication 4, **caractérisée en ce que** la fonction f est sinusoïdale et s'exprime sous la forme

$$f(i) = A \sin \left(B \, \frac{i * 360°}{N}\right)$$

où

A est une amplitude angulaire fixe, de préférence comprise entre 2° et 10°, et

B est un nombre entier, de préférence compris entre 1 et 4.

6. Roue selon l'une des revendications précédentes, **caractérisée en ce que** les aubes ($26_i$) sont de même géométrie.

7. Roue selon l'une des revendications 1 à 5, **caractérisée en ce que** les aubes ($26_i$) sont de géométries différentes.

8. Roue selon la revendication 7, **caractérisée en ce que** l'épaisseur maximale ($e_{26}$) des aubes et/ou la géométrie du bord d'attaque (26a) et/ou du bord de fuite (26b) des aubes ($26_i$) est variable d'une aube à l'autre.

9. Roue selon l'une des revendications 7 ou 8, **caractérisée en ce que** la courbure ($C_{26}$) des aubes ($26_i$) est variable d'une aube à l'autre.

10. Installation (I) de conversion d'énergie hydraulique en énergie électrique ou mécanique, cette installation comprenant une conduite forcée (5) d'amenée d'eau, une roue (2) tournante autour d'un axe de rotation ($X_2$), un arbre (4) de supportage de la roue et un conduit d'aspiration (8), **caractérisée en ce que** la roue (2) est selon l'une des revendications précédentes.

**Patentansprüche**

1. Rad (2) für Francis-Turbine, das eine obere Abdeckung (22), einen Bund (24) und mehrere Schaufeln ($26_i$), die um eine Drehachse ($X_2$) des Rades verteilt sind, umfasst, wobei die Schaufeln ($26_i$) in Bezug auf die Drehachse ($X_2$) nicht symmetrisch sind, **dadurch gekennzeichnet, dass** die Schaufeln eine Verteilung um diese Achse ($X_2$) aufweisen, die nicht periodisch und regelmäßig ist.

2. Rad nach Anspruch 1, **dadurch gekennzeichnet, dass** die Schaufeln ($26_i$) um die Drehachse mit einem nicht konstanten Winkelabstand ($E_i$) zwischen zwei benachbarten Schaufeln ($26_i$) verteilt sind.

3. Rad nach Anspruch 2, **dadurch gekennzeichnet, dass** die Schaufeln ($26_i$) um die Drehachse ($X_2$) mit einer definierten Winkelposition in Bezug auf eine Referenzposition ($R_2$) mittels eines Winkels ($\alpha_i$), der anhand einer Ordnungszahl (i) jeder Schaufel durch eine nicht affine Funktion, insbesondere eine trigonometrische oder zufällige Funktion definiert ist, verteilt sind.

4. Rad nach einem der Ansprüche 2 oder 3, **dadurch gekennzeichnet, dass** die Schaufeln ($26_i$) um die Drehachse ($X_2$) gemäß dem folgenden Gesetz verteilt sind:

$$\alpha_i = \frac{i * 360°}{N} + f(i)$$

wobei

N die Anzahl von Schaufeln des Rades ist,
i eine natürliche Zahl im Bereich von 1 bis $N$ ist,
und f eine nicht affine Funktion ist.

5. Rad nach Anspruch 4, **dadurch gekennzeichnet, dass** die Funktion f sinusförmig ist und gegeben ist durch die Form

$$f(i) = A \sin\left(B\frac{i * 360°}{N}\right)$$

wobei

A eine feste Winkelamplitude, die vorzugsweise im Bereich von 2° bis 10° liegt, ist und
B eine ganze Zahl, die vorzugsweise im Bereich von 1 bis 4 liegt, ist.

6. Rad nach einem der vorhergehenden Ansprüche, **dadurch gekennzeichnet, dass** die Schaufeln ($26_i$) die gleiche Geometrie haben.

7. Rad nach einem der Ansprüche 1 bis 5, **dadurch gekennzeichnet, dass** die Schaufeln ($26_i$) unterschiedliche Geometrien haben.

8. Rad nach Anspruch 7, **dadurch gekennzeichnet, dass** die maximale Dicke ($e_{26}$) der Schaufeln und/oder die Geometrie der Vorderkante (26a) und/oder der Hinterkante (26b) der Schaufeln ($26_i$) von einer Schaufel zur Nächsten variabel sind.

9. Rad nach einem der Ansprüche 7 oder 8, **dadurch gekennzeichnet, dass** die Krümmung ($C_{26}$) der Schaufeln ($26_i$) von einer Schaufel zur Nächsten variabel ist.

10. Anlage (I) für die Umwandlung von hydraulischer Energie in elektrische oder mechanische Energie, wobei diese Anlage eine Leitung (5) für erzwungene Wasserzufuhr, ein Rad (2), das sich um eine Drehachse ($X_2$) dreht, eine Tragwelle (4) des Rades und eine Saugleitung (8) umfasst, **dadurch gekenn-**

zeichnet, dass das Rad (2) wie in einem der vorhergehenden Ansprüche angegeben beschaffen ist.

**Claims**

1. Francis turbine runner (2) comprising a runner crown (22), a runner band (24) and several vanes ($26_i$) distributed about an axis of rotation ($X_2$) of the runner, the vanes ($26_i$) not being symmetric with respect to the axis of rotation ($X_2$), **characterized in that** the vanes have a distribution about this axis ($X_2$) which is not periodic and uniform.

2. Runner according to Claim 1, **characterized in that** the vanes ($26_i$) are distributed about the axis of rotation with an angular separation ($E_i$) between two adjacent vanes ($26_i$) that is not constant.

3. Runner according to Claim 2, **characterized in that** the vanes ($26_i$) are distributed about the axis of rotation ($X_2$) with an angular position that is defined, with respect to a reference position ($R_2$), by means of an angle ($\alpha_i$) determined from an order number (i) of each vane by a non-affine function, notably a trigonometric or random function.

4. Runner according to one of Claims 2 and 3, **characterized in that** the vanes ($26_i$) are distributed about the axis of rotation ($X_2$) according to the law:

$$\alpha_i = \frac{i*360°}{N} + f(i)$$

where

   N is the number of vanes of the runner
   i is a natural integer comprised between 1 and N
   and f is a non-affine function.

5. Runner according to Claim 4, **characterized in that** the function f is sinusoidal and expressed in the form:

$$f(i) = A \sin \left(B \frac{i*360°}{N}\right)$$

where

   A is a fixed angular amplitude, preferably comprised between 2° and 10°, and
   B is an integer, preferably comprised between 1 and 4.

6. Runner according to one of the preceding claims, **characterized in that** the vanes ($26_i$) have the same geometry.

7. Runner according to one of Claims 1 to 5, **characterized in that** the vanes ($26_i$) have different geometries.

8. Runner according to Claim 7, **characterized in that** the maximum thickness ($e_{26}$) of the vanes and/or the geometry of the leading edge (26a) and/or of the trailing edge (26b) of the vanes ($26_i$) is variable from one vane to another.

9. Runner according to one of Claims 7 and 8, **characterized in that** the curvature ($C_{26}$) of the vanes ($26_i$) is variable from one vane to another.

10. Facility (I) for converting hydraulic energy into electrical or mechanical energy, this facility comprising a penstock (5) bringing water in, a runner (2) rotating about an axis of rotation ($X_2$), a shaft (4) supporting the runner and a draft tube (8), **characterized in that** the runner (2) is in accordance with one of the preceding claims.

*Fig.1*

EP 2 596 234 B1

Fig.2

EP 2 596 234 B1

Fig.3

Fig.4

Fig.5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2005038243 A
- US 2010086394 A
- FR 2919553 A